# EUROPEAN PATENT APPLICATION

(11) **EP 0 661 532 A2**
(43) Date of publication of application: **05.07.1995**
(21) Application number: 94403007.1
(22) Date of filing: 23.12.1994
(51) Int. Cl.: G01N 21/03

(54) **Cuvette**

(30) Priority: 28.12.1993 JP 76588/93
(71) Applicant: TOA MEDICAL ELECTRONICS CO., LTD., Kobe-shi Hyogo-ken (JP)
(72) Inventor: Kurosaki, Tsuyoshi, Rowaiyaru Morita 501, Kakogawa-shi, Hyogo-ken (JP)
(74) Representative: Orès, Bernard

(57) **Abstract**

The present invention provides a transparent cuvette (1) to be used for measuring the constituents of a liquid by applying a measuring beam of light from the direction vertical to the central axis of the cuvette; in which a flange is formed on the top thereof, and its cross section is cylindrical on the upper side (4) and is square on the lower side (5).

## Description

### BACKGROUND OF THE INVENTION

### 1. Field of the Invention

The present invention relates to a cuvette. More particularly, it relates to a cuvette to be used for measuring a sample or reagent in the form of a liquid.

### 2. Related Art

To analyze constituents of a liquid such as blood plasma or urine, a cuvett is commonly used in an automatic analyzing apparatus for measuring the absorbance of the liquid by being irradiated with a measuring beam of light from the direction vertical to the central axis of the cuvette and detecting the transmitted light of the liquid. Typically, the cuvette is cylindrical from the top to the bottom as shown in Fig. 5 or square from the top to the bottom as described in Japanese Laid-Open Patent Publication No. Hei 3 (1991)-102262. In the conventional case, the whole cuvette body is made of transparent resin or glass.

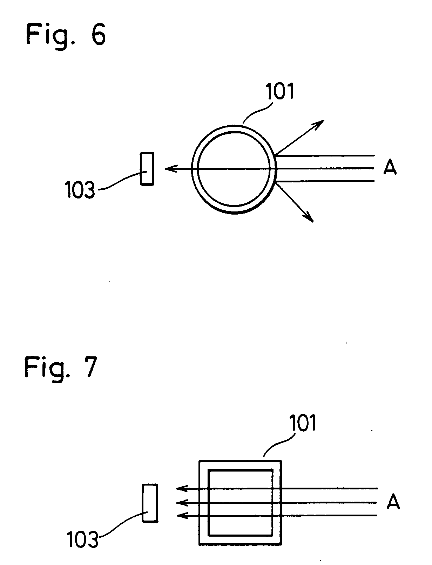

In the case of a cuvette of which shape is cylindrical from the top to the bottom, as shown in Fig.6 (a plan view), when a measuring beam of light A is emitted to cross the vertical axis of the cuvette 101, the beam of light applied to the center of the cuvette 101 passes directly through the cuvette 101, but in the part off the center, a part of the beam of light is not applied perpendicularly to the lateral face of the cuvette 101 but reflected or scattered.

As a result, the quantity of light which a sensor 103 receives drops, so that there are possibilities of lower sensitiveness, increased errors in measurement, and a lack of precision in liquid analysis.

As described in Japanese Laid-Open Patent Publication No. Hei 3(1991)-102262, the cuvette shaped squarely from the top to the the bottom corrects the fault in a circular one because the beam of light is applied perpendicularly to the lateral face off the center of the cuvette 101 as well, as shown in Fig. 7.

Generally, the cuvette 101 is automatically supplied by sliding and moving with a flange 102 sustained by a chute having a groove concave in the cross section or two parallel rails. If the part held by the chute (the part under the flange 102) is cylindrical, the cuvette 101 revolves without a hitch and moves smoothly. However, when the part is square as described above, the cuvette 101 is difficult to supply automatically because it is liable to be caught inside of the chute and stop moving smoothly.

Moreover, since the whole body of the cuvette 101 is transparent, it is not easy to detect the presence or absence of the cuvette 101 directly by using a photo sensor. Accordingly, it has been detected with a mechanical switch. In either case, the cuvette 101 receives a mechanical resistance and smooth conveyance of the cuvette 101 is prevented.

### SUMMARY OF THE INVENTION

The present invention provides a transparent cuvette to be used for measuring the constituents of a liquid by applying a measuring beam of light from the direction vertical to the central axis of the cuvette; in which a flange is formed on the top thereof, and its cross section of the cuvette is cylindrical on the upper side and is square on the lower side.

In another aspect, the present invention provides a transparent cuvette to be used for measuring the constituents of a liquid by applying a measuring beam of light from the direction vertical to the central axis of the cuvette, which is provided with means for shielding or scattering a beam of light to be applied on its lateral face where the measuring beam of light is not applied.

In still another aspect, the present invention provides a transparent cuvette to be used for measuring the constituents of a liquid by applying a measuring beam of light from the direction vertical to the central axis of the cuvette; in which a flange is formed on the top thereof, and its cross section of the cuvette is cylindrical on the upper side and is square on the lower side, and a rough surface is formed annularly on a part of the inner or outer lateral face, or a part of both the lateral faces as means for shielding or scattering a beam of light to be applied on its lateral face where the measuring beam of light is not applied.

### BRIEF DESCRIPTIONS OF THE DRAWINGS

Fig. 1 is a vertical cross section of a first embodiment of the present invention.

Fig. 2 is a vertical cross section through the bottom in the first embodiment of the present invention.

Fig. 3 is a plan view of the first embodiment of the present invention.

Fig. 4 is a perspective view of a second embodiment of the present invention.

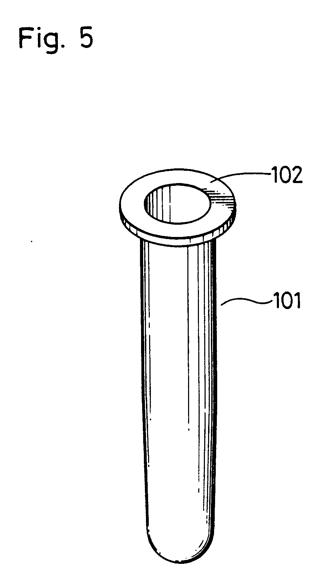

Fig. 5 is a perspective view of a conventional cuvette.

Fig. 6 is a plan view of a first conventional cuvette.

Fig. 7 is a plan view of a second conventional cuvette.

### DETAILED DESCRIPTION OF PREFERRED EMBODIMENTS

The cuvette of the present invention has a shape of a long and narrow vessel. It is, for example, 20 to 150 mm in length and 5-25 mm in thickness. The cross section perpendicularly across the central axis of the cuvette is cylindrical (preferably 5-25 mm in outer diameter) on the upper side (for example, about 1/3 to 2/3 of the whole length), and square (preferably 5-20 mm in width) or square-like on the lower side (for example, about 2/3 to 1/3 of the whole length).

It is preferable that the means for shielding or scattering a beam of light is an opaque surface (colored in pigment) or a rough surface and is formed preferably circularly (for example, about 1/6 to 1/3 of the whole length) on part of the inner or outer lateral surface of the cuvette, or the both thereof. The means can shield the beam of light without any transmission or scatter it with little transmission when it is applied to the cuvette.

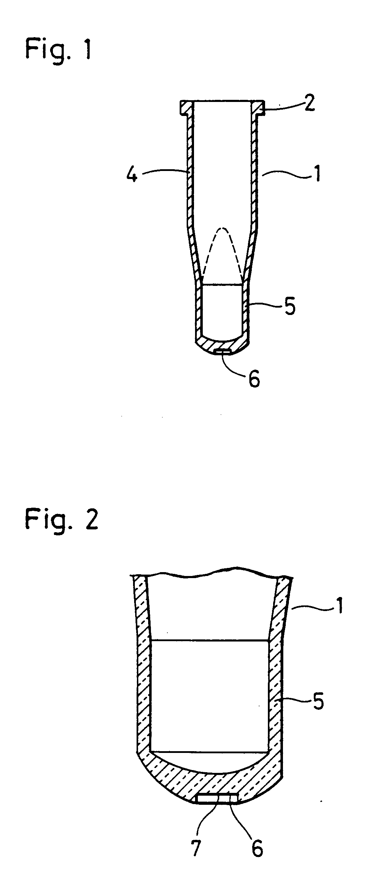

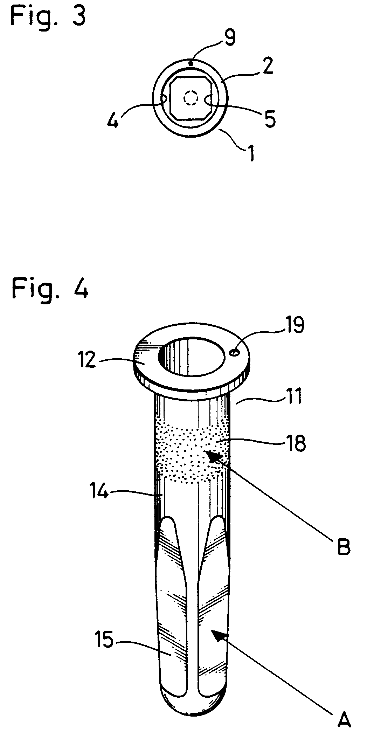

Figs. 1 to 3 show a first embodiment of the present invention. Fig. 1 is a vertical cross section, Fig. 2 is a vertical cross section of the lower part and Fig. 3 is a plan view.

In this embodiment, the cuvette body 1 is made of a synthetic resin such as polystyrene.

As shown in Figs. 1 and 3, a circular flange 2 is formed on the top of the cuvette 1. The flange 2 may have a positioning hole 9 for positioning the cuvette 1. The positioning hole 9 may be a projection instead of the hole.

As shown in Fig. 2, the cross section perpendicularly across the vertical axis is cylindrical on the upper side and square on the lower side.

On the lower side, the corners of a square portion 5 are partly removed and the inner bottom is spherically concave. Since the partly removed corners and spherically concave inner bottom make the mobility of a liquid in the cuvette better, blood plasma and reagents can be mixed with certainty in case of measurement of blood plasma coagulation.

The square portion 5 is not necessarily four-sided tube. For example, any-sided tube such as three-sided and five-sided tube may be also used.

Fig. 2 also shows a concave 6 which is formed in the outer bottom and a projection 7 at a gate portion for injecting material resin in the concave 6. A gate itself in the gate portion is well-known as an inlet which is bored in metal mold.

In the gate portion, since the projection 7 does not come out below the concave 6, the cuvette 1 can stand upright on a flat surface.

Incidentally, when the cuvette 1 is made of glass, the concave 6 is not necessary.

When the cuvette 1 of the present invention is used for measurement, a sample of blood plasma and a coagulating reagent are injected into the cuvette, and stirred and homogenized. Then, a chute (not shown) sustains the flange 2 and holds a cylindrical portion 4, and moves the cuvette 1 such that the flat surface of the square portion 5 is positioned facing a measuring beam of light A at the measuring part. Next, a measuring beam of light is applied to a side of the cuvette 1 to measure the absorbance of the transmitted light and the scattered light going in a direction perpendicular with that of the applied measuring beam of light and the like, whereby the characteristics of blood plasma coagulation can be analyzed.

As the cuvette 1 is moved with the cylindrical portion 4 which is held by the chute in the measuring process, the cuvette 1 is allowed to revolve freely and move smoothly.

In addition, since the flat surface of the square portion 5 is positioned facing a measuring beam of light A at the measuring part, the beam of light A is sufficiently transmitted through the cuvette 1.

Fig. 4 shows a perspective view of another embodiment of the present invention. In this embodiment, a cuvette 11 is provided with a rough surface 18 in part of the outer lateral face of a cylindrical portion 14 circularly.

The rough surface 18 scatters a detecting beam of light B which is irradiated thereto, so that the presence or absence of the cuvette 11 can be easily detected by a photo sensor placed opposite to a detecting beam of light B without touching the cuvette.

The rough surface 18 is formed by making a part of the outer lateral face be a frosted glass, for example, by the sand blast method wherein abrasive sand is sprayed by pressured air. Alternatively, the surface may be roughed on the inner lateral face or both the faces, or opaquely colored instead of roughing the surface.

According to the present invention, since the flange is formed on the top of the cuvette, and the cross section of the cuvette which is perpendicularly across the axis is cylindrical on the upper side and square or square-like on the lower side, the cuvette revolves without a hitch and moves smoothly without being caught in the chute. In addition, the flat surface facing to a measuring beam of light enables precise liquid analysis, the partly removed corners and spherically concave inner bottom make the mobility of liquid in the cuvette better and blood plasma and reagents can be mixed with certainty.

Moreover, in the present invention, the cuvette is provided with means for shielding or scattering beam of light on the lateral face where a measuring beam of light is not applied, whereby the presence or absence of the cuvette can be optically detected by applying a detecting beam of light without touching or blocking the movement of the cuvette.

## Claims

1. A transparent cuvette to be used for measuring the constituents of a liquid by applying a measuring beam of light from the direction vertical to the central axis of the cuvette; in which a flange (2) is formed on the top thereof, and its cross section of the cuvette (1) is cylindrical on the upper side (4) and is square on the lower side (5).

2. A cuvette as defined in Claim 1 which is made of a synthetic resin and provided with a gate (7) for injecting the resin in a concave (6) formed on the outer bottom of the cuvette.

3. A transparent cuvette to be used for measuring the constituents of a liquid by applying a measuring beam of light from the direction vertical to the central axis of the cuvette (1), which is provided with means (18) for shielding or scattering a beam of light to be applied on its lateral face where the measuring beam of light is not applied.

4. A transparent cuvette to be used for measuring the constituents of a liquid by applying a measuring beam of light from the direction vertical to the central axis of the cuvette (1); in which a flange (2) is formed on the top thereof, and its cross section of the cuvette is cylindrical on the upper side (4) and is square on the lower side (5), and which is provided with means (18) for shielding or scattering a beam of light to be applied on its lateral face where the measuring beam of light is not applied.

5. A cuvette defined in Claim 3 or 4 wherein the means for shielding or scattering a beam of light to be applied is a rough surface (18) formed annularly on a part of the inner or outer lateral face, or a part of both the lateral faces.
